# EUROPEAN PATENT SPECIFICATION

(11) **EP 2 463 516 B1**
(45) Date of publication and mention of the grant of the patent: **31.07.2013**
(21) Application number: 11009044.6
(22) Date of filing: 15.11.2011
(51) Int. Cl.: F03D 5/00, F03D 5/06, B63H 9/00

(54) **Aeolian system for converting energy through power wing airfoils**
System zur Umwandlung von Energie basierend auf einem lenkbaren Tragflügel
Système éolien comprenant une aile portante dirigeable

(30) Priority: 09.12.2010 IT TO20100980
(43) Date of publication of application: 13.06.2012
(73) Proprietor: Kite Gen Research S.R.L., 10023 Chieri (TO) (IT)
(72) Inventor: Ippolito, Massimo, 14020 Berzano di San Pietro (AT) (IT)
(74) Representative: Garavelli, Paolo

(56) References cited:
- WO-A1-2007/122650
- US-A1- 2010 232 988

## Description

The present invention refers to an aeolian system for converting energy through at least one power wing airfoil.

Systems and devices are known in the art that subtract aeolian energy to the wind by means of power wing airfoils (generally designated by the term "kite") in order to produce low-cost electricity by exploiting renewable energy sources, such as those disclosed, for example, in prior patents n. US 4.124.182, CN 1.052.723, GB 2.317.422, US 6.072.245, US 6.254.034, NL1017171C, US 6.523.781, US2005046197.

In particular, European Patent Application n. 06745301.9 in the name of the Applicant discloses an aeolian system comprising at least one power wing airfoil that can be driven from the ground immersed in at least one aeolian current composed of a basic platform placed at ground level and connected through two ropes to the power wing airfoil itself, such basic platform being adapted to drive the wing airfoil and convert the aeolian energy of the aeolian current into electric or mechanical energy by means of winches for winding / unwinding the ropes connected to electric generators/motors. In particular, such system is equipped with a routing system for the ropes towards the wing airfoil comprising mechanisms for dampening the sudden load variations acting on the wing airfoil composed of blocks and elastic elements, such as for example an elastic cable or a spring, that are highly complex to make and are unsatisfactory in their operating reliability.

Moreover, the routing system of the aeolian system according to European Patent Application n. 06745301.9 is not equipped with a structure that is able to follow in a scheduled and expected way the movement of the wing airfoil durint its various flight trajectories.

Therefore, object of the present invention is providing an aeolian system for converting energy through at least one power wing airfoil comprising a routing system of the ropes towards the airfoil itself equipped with a trellis-type supporting structure that can be deformed in a scheduled and expected way depending on loads exerted by the wing airfoil.

Another object of the present invention is providing an aeolian system comprising a routing system equipped with mechanisms for dampening the sudden load variations that can be more practically, economically and reliabily made.

The above and other objects and advantages of the invention, as will result from the following description, are obtained with an aeolian system for converting energy through at least one power wing airfoil as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

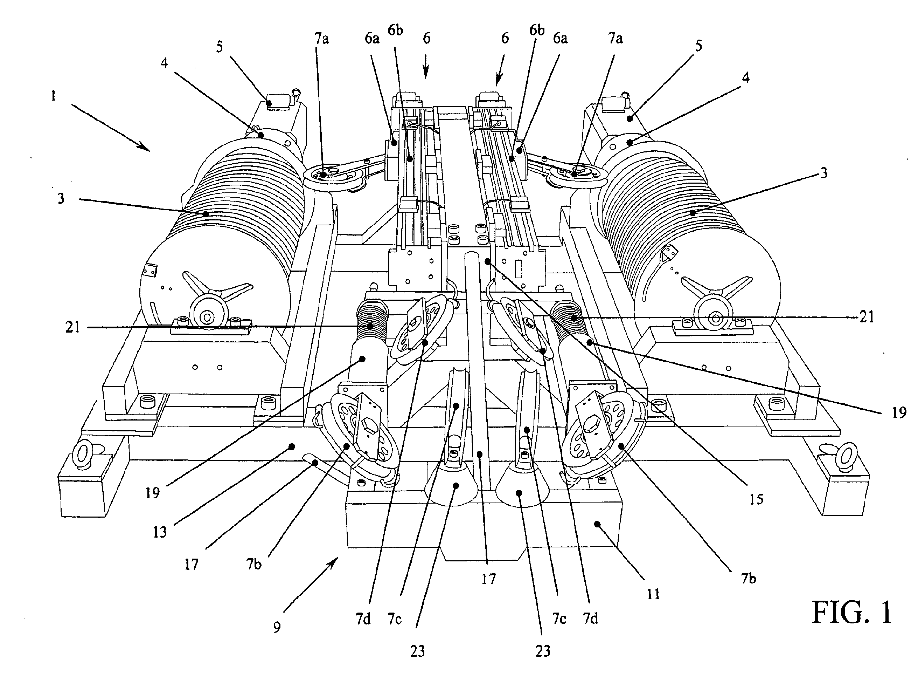

- Figure 1 shows a front perspective view of a preferred embodiment of the aeolian system according to the present invention;
- Figure 2 shows a top view of a preferred embodiment of a component of the aeolian system according to the present invention;
- Figure 3 shows a side perspective view of a preferred embodiment of the component of Figure 2; and
- Figure 4 shows a side view of a preferred embodiment of the component of Figure 2.

With reference to the Figures, it is possible to note that the aeolian system for converting energy according to the present invention comprises:
- at least one power wing airfoil (not shown) that can be driven from the ground (herein below, for briefness also designated with the term "kite") immersed into the aeolian currents to be captured. Such wing airfoil is made by weaving fibers commonly used in manufacturing specific sails for certain sports activities, such as, for example, surf and kart. A major specification that characterises the kite is its surface area. Due to recent aerodynamic studies, wing airfoils are available on the market that are able to satisfy certain needs in terms of control and drivability. By suitably driving a wing airfoil, it is possible to modulate the wind energy transfer. In particular, it is possible to drive the kite along a flight trajectory, taking it from a position in which the traction exerted by aeolian currents in which the wing airfoil is immersed is maximum to an almost stalled positione (that can be of an azimuth or lateral type), in which such traction is minimum. By cyclically alternating a phase of maximum traction to a phase of almost stall and following recovery, it is possible to generate electric energy, as will be described below in more detail;
- a basic platform 1, adapted to drive the wing airfoil and to convert the aeolian energy of the aeolian current into electric or mechanical energy, preferably placed at ground level and connected through two ropes 2 to the power wing airfoil, such two ropes 2 being adapted to transmit forces from and towards the wing airfoil and used both for controlling the flight trajectory of the wing airfoil itself and for transmitting energy, in the following modes. It is possible to provide more power wing airfoils mutually connected in series, in order to sum the pull on the ropes 2. The wing airfoils are in fact connected to the basic platform 1 through a single system of ropes 2. For easiness, herein below reference will be made to the case in which the aeolian system according to the present invention is equipped with a single wing airfoil. The operating principle of the aeolian system according to the present invention in fact does not depend on the number of wing airfoils that are used. The advantage deriving from the use of many power wing airfoils consists in the increase of the surface of the wind front intercepted by such airfoils and consequently in the increase of the pull on the winches 3 and the electric energy that can be generated in every operating cycle. In particular, the basic platform 1 comprises at least two winches 3, on each of which a respective rope 2 is wound or unwound, each one of such winches 3 being connected, possibly by interposing at least one reducer 4, to an electric generator/motor 5. Next to each winch 3, there is a driving module 6 that compels each rope 2 to be orderly wound on its respective winch 3. The wing airfoil is then driven by unwinding and re-winding the ropes 2 on their respective winches 3. The ropes 2 are therefore the connection element between kite and basic platform 1, and allow transferring the force between the kite itself and the winches 3. When the kite is lifted by the wind, the ropes 2 determine the rotation of the winches 3 and, consequently, the energy conversion by means of the generators 5. Instead, during the kite recovery, the ropes 2 transmit to the wing airfoil the tension generated by the rotation of the winches 3 by means of the motors. Obviously, the length and diameter of each rope 2 depend on wind and safety conditions under which one wants to operate;
- a routing system adapted to drive each rope 2 towards the wing airfoil comprising, in particular, a first pair of blocks 7a assembled on sliders 6a of the driving modules 6 for the ropes 2, a second pair of blocks 7b placed downstream of the driving modules 6 for the ropes 2 and adapted to keep horizontal the lengths of rope 2 included between these same blocks 7b and those assembled on the sliders 6a of the driving modules 6, a third pair of blocks 7c adapted to route the ropes 2 towards the wing airfoil, a fourth pair of blocks 7d adapted to route the ropes 2 coming from the second pair of blocks 7b towards the third pair of blocks 7c, such fourth pair of blocks 7d also performing the function of rope-tensioning means.

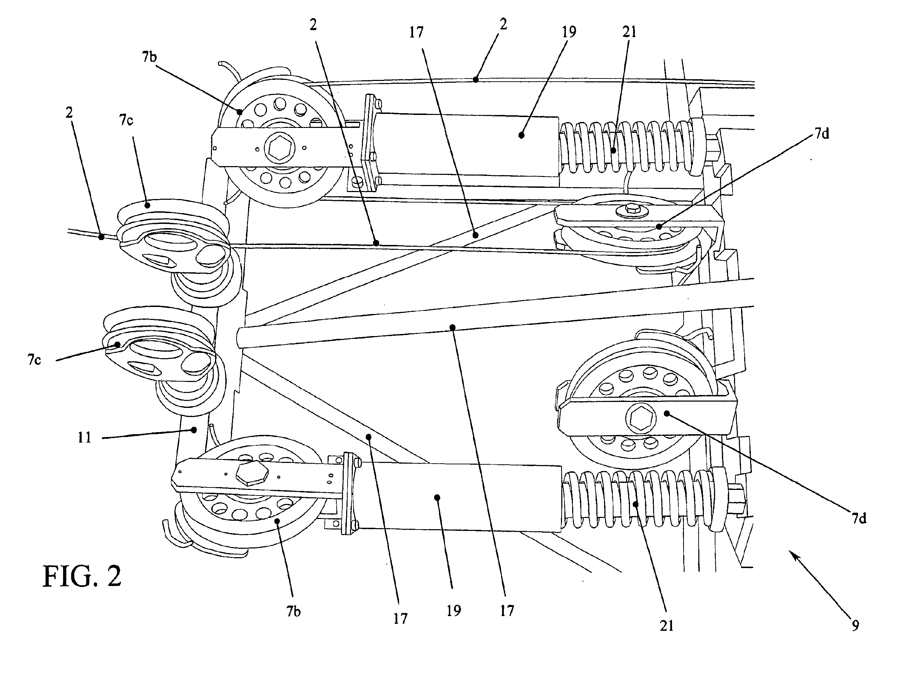

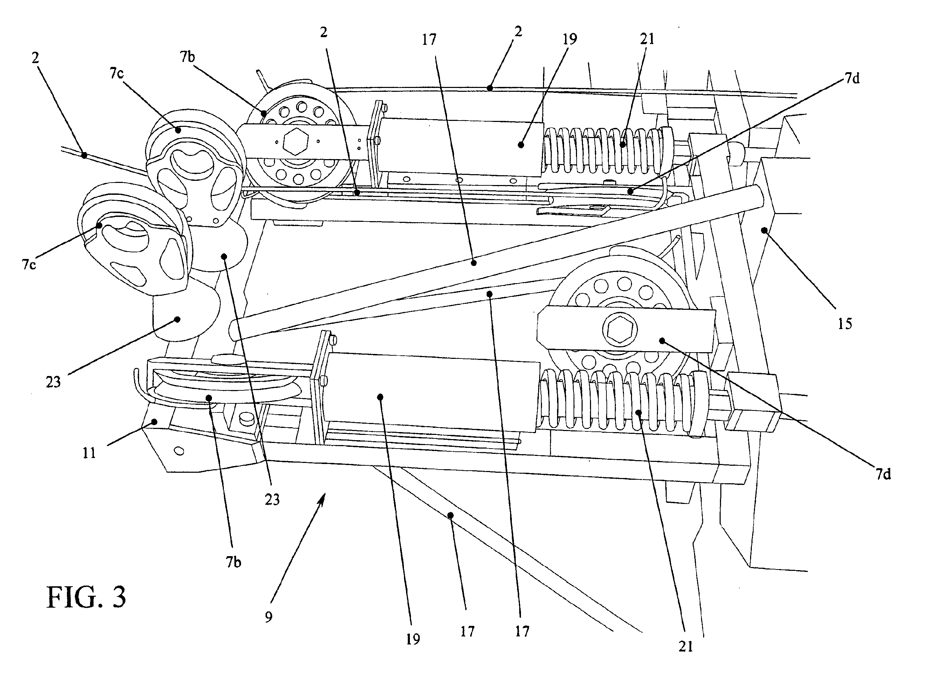

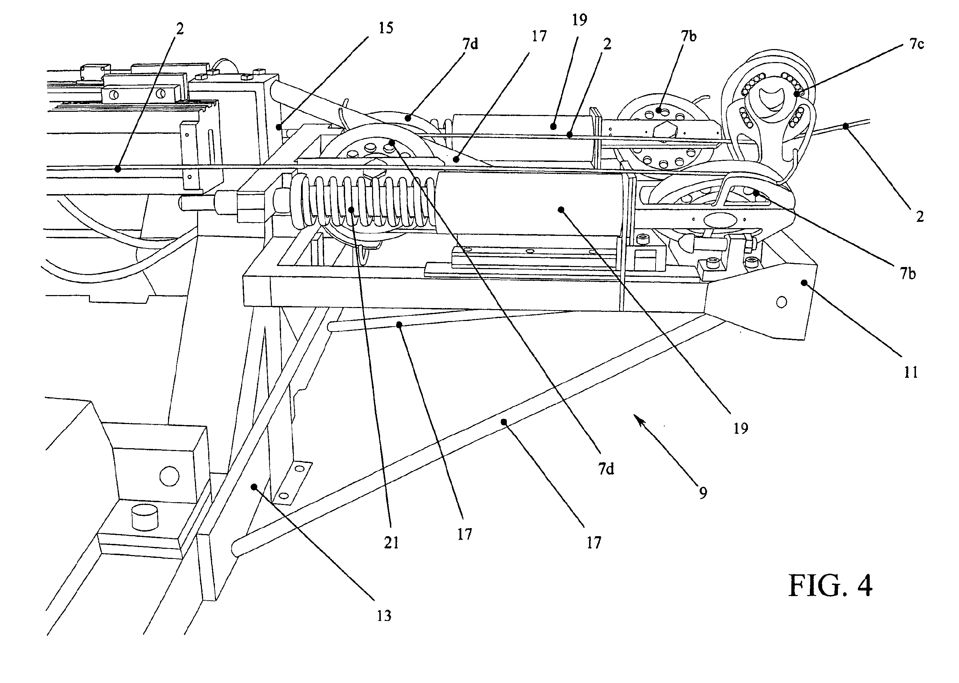

Advantageously, as shown for example in Figures 2 to 4, the routing system comprises a trellis-type supporting structure 9 composed of strain gauges (17) virtually arranged along the edges of a pyramid with triangular plan having its vertex on a connection point of the third pair of blocks 7c. Such arrangement of the strain gauges 17 advantageously allows the trellis-type supporting structure 9 of the routing system to be deformed in a scheduled way depending on different, and possibly sudden, load levels exerted by the wing airfoil on the third pair of blocks 7c arranged on the external cross member 11.

Preferably, the trellis-type supporting structure 9 is composed of an external cross member 11 to which the third pair of blocks 7c is connected, a lower internal cross member 13 and an internal riser 15, such internal riser 15 being connected to such lower internal cross member 13, each one of the ends of such lower internal cross member 13 and the upper end of such internal riser 15 being connected to the connection point of the third blocks 7c in a substantially central point of such external cross member 11 by at least one of the respective strain gauges 17.

Moreover, always advantageously, the routing system comprises at least one pair of mechanisms for dampening the sudden load variations included between the first 7a and the second 7b pair of blocks, each one of such mechanisms for dampening comprising at least one shock absorber 19, preferably of the type with spring 21, coaxially arranged to the longitudinal sliding direction of the rope 2 between the respective first 7a and second 7b block, such second block 7b being connected to an external end of a respective shock absorber 19. When a wind blow occurs, the shock absorbers 19 of the mechanisms for dampening are compressed, attenuating the sudden load variation operating on the wing airfoil. Vice versa, if the load suddenly decreases, the shock absorbers 19 of the mechanisms for dampening are stretched in order to cope with the tension decrease. The routing system shown in the Figures is preferably equipped with two mechanisms for dampening the sudden load variations, one next to each winch 3.

In the third blocks 7c accompanying the ropes towards the wing airfoil, it is possible to make a connection rotating on the basic platform 1, and in particular on the external cross member 11 of the trellis-type supporting structure 9 of the routing system made through at least one spring 23. This allows a great freedom of rotation and this requirement is fundamental to be able to accompany the ropes 2 towards the wing airfoil during the operation of the system according to the present invention.

The driving modules 6 are the components of the basic platform 1 that compel the ropes 2 to be orderly wound on the winches 3 and prevent a sliding between the ropes 2 and the flanks of the winches 3 and between the ropes 2 themselves. Each driving module 6 is equipped with the slider 6a sliding along a rail 6b arranged in parallel to the rotation axis of the respective winch 3. The slider 6a is able to translate along the two directions along such rail 6b and the first block 7a is assembled on it. In particular, sliding of such slider 6a is driven by a sliding mechanism (not shown) that makes it move together with the rotation of the winch 3. Preferably, the sliding mechanism can be with a screw control or a belt control. In the sliding mechanism with screw control, the translation of the slider 6a along the rail 6b is driven by the rotation of a precision screw with ball recirculation. In the sliding mechanism with belt control, the slider 6a is assembled on an endless belt.

In the driving modules 6 of the ropes 2, the translation of the slider is driven by at least one electric motor (not shown) that operates on the sliding mechanism whose operation is regulated by the smart control system that drives the wing airfoil.

The system according to the present invention is preferably equipped with two driving modules 6 of the ropes 2, one next to each winch 3.

The winches 3 are components equipped with winches around which the ropes 2 are wound. The winches 3 are connected, by interposing the reducers 4, preferably of the epicycloidal type, to the electric generators/motors 5. The rotation of each winch 3 is therefore linked to the rotation of a corresponding drive shaft. During the phase of generating electric energy, it is the unwinding of the ropes 2 from the winches that imposes the rotation of the winches 3. During the recovery of the wing airfoil, instead, the motors actuate the winches 3. The device contains two winches 3, one for each rope 2.

The generators 5 are the components through which the production of electricity occurs. Their actuation occurs by the winches 3 when unwinding the ropes 2. In the system according to the present invention, the generators 5 also operate as motors, taking care of re-winding the ropes 2 on the winch 3 when it is necessary to recover the wing airfoil. The electric generators/motors 5 are driven by the smart control system in the modes that will be described below, and the system according to the present invention is preferably equipped with two electric generators/motors 5.

Obviously, the aeolian system 1 according to the present invention can cooperate with a smart control system operating on the basic platform 1 through which the flight of the wing airfoil is automatically controlled, and a supplying system 12 cooperating with such smart control system in order to manage the accumulation and delivery of electric energy. The smart control system cooperates with a set of self-supplying sensors placed on the wing airfoil, which send information, preferably in wireless mode, to the ground components of the smart control system itself. The smart control system integrates these information with other information coming from a set of ground sensors (for example the value of the rope loads determined by reading the motor torque) and performs processings in order to automatically drive the wing airfoil during its whole operating cycle: preferably, such smart control system is the one disclosed in European Patent Application n. 06745301.9.

## Claims

1. Aeolian system for converting energy comprising:
- at least one power wing airfoil that can be driven from the ground immersed in at least one aeolian current;
- a basic platform (1) connected through two ropes (2) to said power wing airfoil, said basic platform (1) being adapted to drive said wing airfoil and to convert an aeolian energy of said aeolian current into electrical or mechanical energy, said two ropes (2) being adapted to transmit forces from and towards said wing airfoil and to be used both for controlling a flight trajectory of said wing airfoil and for transmitting energy;
- a routing system adapted to drive each one of said ropes (2) towards said wing airfoil comprising a first pair of blocks (7a) assembled on sliders (6a) of driving modules (6) of said ropes (2), a second pair of blocks (7b) placed downstream of said driving modules (6) of said ropes (2) and adapted to keep horizontal the lengths of said rope (2) included between said second blocks (7b) and said first blocks (7a) assembled on said sliders (6a) of said driving modules (6), a third pair of blocks (7c) adapted to route said ropes (2) towards said wing airfoil, a fourth pair of blocks (7d) adapted to route said ropes (2) coming from said second pair of blocks (7b) towards said third pair of blocks (7c), **characterised in that** said routing system comprises a trellis-type supporting structure (9) composed of strain gauges (17) virtually arranged along edges of a pyramid with triangular plan having its vertex on a connection point of said third pair of blocks (7c).

2. Aeolian system according to claim 1, **characterised in that** said trellis-type supporting structure (9) is composed of an external cross member (11) to which said third pair of blocks (7c) is connected, a lower internal cross member (13) and an internal riser (15), each end of said lower internal cross member (13) and an upper end of said internal riser (15) being connected to said connection point of said third pair of blocks (7c) in a substantially central point of said external cross member (11) through a respective strain gauge (17).

3. Aeolian system according to claim 1, **characterised in that** said routing system comprises at least one pair of mechanisms for dampening the sudden load variations included between said first (7a) and said second (7b) pair of blocks.

4. Aeolian system according to claim 3, **characterised in that** each one of said mechanisms for dampening comprises at least one shock absorber (19) arranged coaxially to a longitudinal sliding direction of said rope (2) between a respective one of said first (7a) and second (7b) blocks, said second block (7b) being connected to an external end of a respective one of said shock absorbers (19).

5. Aeolian system according to claim 4, **characterised in that** said shock absorber (19) is with a spring (21).

6. Aeolian system according to claim 1, **characterised in that** said basic platform (1) comprises at least two winches (3), on each one of which a respective one of said ropes (2) is wound or unwound, each one of said winches (3) being connected to an electric generator/motor (5).

7. Aeolian system according to claim 6, **characterised in that** said winch (3) is connected to said electric generator/motor (5) by interposing at least one epicycloidal reducer (4).

8. Aeolian system according to claim 1, **characterised in that** said third blocks (7c) are equipped with a rotating connection to said basic platform (1) made with at least one spring (23).

9. Aeolian system according to claim 1, **characterised in that** said slider (6a) slides along a rail (6b) in parallel with a rotation axis of said winch (3).

10. Aeolian system according to claim 9, **characterised in that** the sliding of said slider (6a) along said rail (6b) is driven by a sliding mechanism together with a rotation of said winch (3).

## Patentansprüche

1. Windsystem für die Umwandlung von Energie, das folgendes einschließt:
- mindestens ein leistungsstarkes Flügelprofil, das vom Boden gesteuert werden kann und sich in mindestens einem Windstrom befindet;
- eine Basisplattform (1), die in Bodenhöhe angebracht ist und durch zwei Seile (2) mit dem genannten leistungsstarken Flügelprofil verbunden ist, die genannte Basisplattform (1) dient dazu, das genannte Flügelprofil zu steuern und die Windenergie des genannten Windstroms in elektrische oder mechanische Energie umzuwandeln, die beiden genannten Seile (2) dienen dazu, Kräfte vom genannten und an das genannte Flügelprofil zu übertragen und sowohl für die Kontrolle einer Flugbahn des genannten Flügelprofils als auch für eine Energieübertragung verwendet zu werden;
- ein Umlenksystem, das dazu dient, jedes genannte Seil (2) in Richtung des genannten Flügelprofils zu lenken, welches ein erstes Blockpaar (7a), das auf Gleitbacken (6a) von Führungsmodulen (6) der genannten Seile (2) montiert ist, ein zweites Blockpaar (7b), das hinter den genannten Führungsmodulen (6) der genannten Seile (2) angebracht ist und dazu dient, die Abschnitte des genannten Seils (2) horizontal zu halten, die zwischen den genannten zweiten Blöcken (7b) und den genannten ersten Blöcken (7a), welche auf den genannten Gleitbacken (6a) der genannten Führungsmodule (6) montiert sind, enthalten sind, ein drittes Blockpaar (7c), das dazu dient, die genannten Seile (2) in Richtung des genannten Flügelprofils umzulenken, ein viertes Blockpaar (7d), das dazu dient, die genannten Seile (2), die vom genannten zweiten Blockpaar (7b) kommen, in Richtung des dritten Blockpaars (7c) umzulenken, enthält, und **dadurch gekennzeichnet ist, dass** das genannte Umlenksystem eine Gittertragstruktur (9) enthält, die aus Dehnungsmessern oder "strain gauge" (17) besteht, welche virtuell längs den Kanten einer Pyramide mit dreieckigem Grundriss angeordnet sind, und ihren Gipfel an einem Verbindungspunkt des genannten dritten Blockpaares (7c) haben.

2. Windsystem gemäß Patentanspruch 1, das **dadurch gekennzeichnet ist, dass** die genannte Gittertragstruktur (9) aus einem externen Querträger (11), mit dem das genannte dritte Blockpaar (7c) verbunden ist, einem internen unteren Querträger (13) und einem internen Pfosten (15) besteht, jedes Endstück des genannten unteren internen Querträgers (13) und ein oberes Endstück des genannten internen Pfostens (15) sind mit dem genannten Verbindungspunkt des genannten dritten Blockpaares (7c) in einem grundlegend zentralen Punkt des genannten externen Querträgers (11) durch ein entsprechendes Dehnungsmesser oder "strain gauge" (17) verbunden.

3. Windsystem gemäß Patentanspruch 1, das **dadurch gekennzeichnet ist, dass** das genannte Umlenksystem mindestens ein Paar Dämpfungsmechanismen für die plötzlich auftretenden Laständerungen einschließt, das zwischen dem genannten ersten (7a) und dem genannten zweiten (7b) Blockpaar enthalten ist.

4. Windsystem gemäß Patentanspruch 3, das **dadurch gekennzeichnet ist, dass** jeder der Dämpfungsmechanismen mindestens einen Stoßdämpfer (19) enthält, der koaxial in einer longitudinalen Gleitrichtung des genannten Seils (2) zwischen einem entsprechenden ersten (7a) und einem zweiten (7b) Block angeordnet ist, der genannte zweite Block (7b) ist mit einem externen Endstück eines entsprechenden genannten Stoßdämpfers (19) verbunden.

5. Windsystem gemäß Patentanspruch 4, das **dadurch gekennzeichnet ist, dass** der genannte Stoßdämpfer (19) ein Federstoßdämpfer (21) ist.

6. Windsystem gemäß Patentanspruch 1, das **dadurch gekennzeichnet ist, dass** die genannte Basisplattform (1) mindestens zwei Hebewinden (3) enthält, an denen jeweils ein entsprechendes genanntes Seil (2) auf- oder abgerollt ist, jede der Hebewinden (3) ist mit einem Generator/Elektromotor (5) verbunden.

7. Windsystem gemäß Patentanspruch 6, das **dadurch gekennzeichnet ist, dass** die genannte Hebewinde (3) mit dem genannten Generator/Elektromotor (5) durch mindestens ein dazwischen angebrachtes Planetenuntersetzungsgetriebe (4) verbunden ist.

8. Windsystem gemäß Patentanspruch 1, das **dadurch gekennzeichnet ist, dass** die genannten dritten Blöcke (7c) mit einer Drehverbindung an der genannten Basisplattform (1) ausgestattet sind, die durch mindestens eine Feder (23) realisiert wird.

9. Windsystem gemäß Patentanspruch 1, das **dadurch gekennzeichnet ist, dass** die genannte Gleitbacke (6a) längs einer Schiene (6b) parallel zu einer Drehachse der genannten Hebewinde (3) gleitet.

10. Windsystem gemäß Patentanspruch 9, das **dadurch gekennzeichnet ist, dass** das Gleiten der genannten Gleitbacke (6a) längs der genannten Schiene (6b) durch einen Gleitmechanismus zusammen mit einer Drehung der genannten Hebewinde (3) gesteuert wird.

## Revendications

1. Système éolien pour la conversion d'énergie comprenant :
- au moins un profil alaire de puissance manoeuvrable de terre immergé dans au moins un courant éolien ;
- une plateforme base (1) placée au niveau du sol et connectée au moyen de deux câbles (2) audit profil alaire de puissance, ladite plateforme base (1) étant apte à manoeuvrer ledit profil alaire et à convertir une énergie éolienne dudit courant éolien en énergie électrique ou mécanique, lesdits deux câbles (2) étant aptes à transmettre des forces de et vers ledit profil alaire et être utilisés à la fois pour un contrôle d'une trajectoire de vol dudit profil alaire et pour une transmission d'énergie;
- un système de renvoi apte à guider chaque câble (2) vers ledit profil alaire comprenant un premier couple de moufles (7a) monté sur des patins (6a) de modules de guidage (6) des dits câbles (2), un second couple de moufles (7b) placé en aval desdits modules de guidage (6) desdits câbles (2) et apte à maintenir horizontales les parties dudit câble (2) compris entre lesdites secondes moufles (7b) et lesdites premières moufles (7a) montées sur lesdits patins (6a) desdits modules de guidage (6), un troisième couple de moufles (7c) apte à renvoyer lesdits câbles (2) vers ledit profil alaire, un quatrième couple de moufles (7d) apte à renvoyer lesdits câbles (2) provenant du second couple de moufles (7b) vers ledit troisième couple de moufles (7c), **caractérisé par le fait que** ledit système de renvoi comprend une structure de support à treillis (9) composée d'extensomètres ou «strain gauge» (17) disposés virtuellement le long des coins d'une pyramide à plan triangulaire avec le sommet sur un point de connexion dudit troisième couple de moufles (7c).

2. Système éolien selon la revendication 1, **caractérisé par le fait que** ladite structure de support en treillis (9) est composée d'une traverse externe (11) à laquelle est connecté ledit troisième couple de moufles (7c), une traverse interne inférieure (13) et un montant interne (15), chaque extrémité de ladite traverse interne inférieure (13) et une extrémité supérieure dudit montant interne (15) étant connectées audit point de connexion du dit troisième couple de moufles (7c) en un point substantiellement central de ladite traverse externe (11) au moyen d'un extensomètre respectif ou «strain gauge» (17).

3. Système éolien selon la revendication 1, **caractérisé par le fait que** ledit système de renvoi comprend au moins un couple de mécanismes d'atténuation des variations improvisées de chargement compris entre ledit premier (7a) et le second (7b) couple de moufles.

4. Système éolien selon la revendication 3, **caractérisé par le fait que** chacun desdits mécanismes d'atténuation comprend au moins un amortisseur (19) disposé en mode coaxial à une direction longitudinale de glissement du dit câble (2) entre un premier respectif (7a) et second (7b) moufle, ledit second moufle (7b) étant connecté à une extrémité externe d'un respectif desdits amortisseurs (19).

5. Système éolien selon la revendication 4, **caractérisé par le fait que** ledit amortisseur (19) est à ressort (21).

6. Système éolien selon la revendication 1, **caractérisé par le fait que** ladite plateforme base (1) comprend au moins deux treuils (3) sur chacun desquels est enroulée ou déroulée ledit câble respectif (2), chacun desdits treuils (3) étant connecté à un générateur/moteur électrique (5).

7. Système éolien selon la revendication 6, **caractérisé par le fait que** ledit vérin (3) est connecté audit générateur/moteur électrique (5) par l'interposition d"au moins un réducteur épicycloïdale (4).

8. Système éolien selon la revendication 1, **caractérisé par le fait que** lesdites troisièmes moufles (7c) sont dotées d'une attache tournante à ladite plateforme base (1) réalisé au moyen d'au moins un ressort (23).

9. Système éolien selon la revendication 1, **caractérisé par le fait que** ledit patin (6a) glisse le long un rail (6b) parallèlement à un axe de rotation de dit vérin (3).

10. Système éolien selon la revendication 9, **caractérisé par le fait que** le glissement dudit patin (6a) le long dudit rail (6b) est commandé par un mécanisme de coulissement simultanément à une rotation dudit vérin (3).
